# EUROPÄISCHE PATENTANMELDUNG

(11) **EP 2 777 396 A1**
(43) Veröffentlichungstag der Anmeldung: **17.09.2014**
(21) Anmeldenummer: 13158730.5
(22) Anmeldetag: 12.03.2013
(51) Int. Cl.: A01N 31/08, A01N 37/02, C14C 1/00, C14C 9/00, A01N 43/80, A01N 47/12, A01N 43/653

(54) **Wirkstoffpräparationen zum fungiziden Schutz von collagenfaserhaltigen Substraten**

(71) Anmelder: LANXESS Deutschland GmbH, 50569 Köln (DE)
(72) Erfinder: Die Erfindernennung liegt noch nicht vor

(57) **Zusammenfassung**

Wirkstoffpräparationen, enthaltend wenigstens 85 Gew.%, bevorzugt wenigstens 92 Gew.%, besonders bevorzugt wenigstens 94 Gew.%, ganz besonders bevorzugt wenigstens 98 Gew.% einer Zusammensetzung bestehend aus jeweils bezogen auf die Zusammensetzung
a) 20 - 79 Gew.-%, bevorzugt 30 - 50 Gew.-% wenigstens einer C₈-C₁₈-Carbonsäure oder deren Derivate, bevorzugt Caprylsäure,
b) 20 - 75 Gew.-%, bevorzugt 30 - 60 Gew.-% eines einzigen phenolischen Wirkstoffes,
c) 1 - 20 Gew.-%, bevorzugt 2 - 17 Gew.-% weiterer Fungizidwirkstoffe,
d) 0 - < 2 Gew.% eines einzigen von Komponente b) unterschiedlichen phenolischen Wirkstoffes.

## Beschreibung

Die Erfindung betrifft Wirkstoffpräparationen, Verfahren zu ihrer Herstellung sowie ihre Verwendung zur Konservierung von collagenfaserhaltigen Substraten, insbesondere tierischen Häuten, Leder, Pelzfellen, sowie deren Halbfabrikate (Wet blue / Wet white).

Zum Schutz von Häuten, Leder und Pelzfellen, sowie deren Halbfabrikate (Wet blue / Wet white) werden bevorzugt flüssige Darreichungen fungizider Wirkstoffformulierungen eingesetzt. Der Vorteil der flüssigen Applikation gegenüber festen Produkten liegt in der leichteren Handhabbarkeit dieser Formulierungen, wie z. B. nicht staubend, pump- und gießfähig, direkte Verteilung im wässrigen Prozessmedium (Pickel-, Gerbflotte oder Fettlicker), kein Lösen, Sprüh-Applikation - verdünnt / unverdünnt möglich.

Bekannt sind bspw. aus älteren Anmeldungen, wie WO-A-96/36739, WO-A98/56959 und WO-A-02/23985 Wirkstofflösungen phenolischer Wirkstoffe mit einem Wirkstoffgehalt von bis zu 50 Gew.-% für die Konservierung von Leder und tierischen Häuten.

Weiterhin ist bekannt aus den Anmeldungen EP 0 553 628 A1, US 2007/0292465 A1 und WO 2010018156 A1, dass Darreichungen eutektischer Gemische, basierend auf phenolischen Wirkstoffen, auch in Kombination mit weiteren Fungiziden, zum Schutz von Häuten und Leder, sowie deren Halbfabrikate eingesetzt werden können.

Zusätzlich ist bekannt, aus Anmeldungen DE 102008040953 A1 sowie US 4,484,925, dass bestimmte Carbonsäurederivate und deren Salze zur fungistatischen Ausrüstung von Leder, Fellen und Häuten, sowie deren Halbfabrikate in der Lederindustrie Anwendung finden können. Darin wurde zwar mit der vorzugsweisen Anwendung von Oktansäure (Caprylsäure) ein wesentlicher Beitrag zur Verringerung der toxikologischen Belastung durch zum Teil giftige fungizide Wirkstoffe beschrieben. Jedoch müssen zum tatsächlichen Schutz von Leder, Fellen und Häuten, sowie deren Halbfabrikaten, größere Mengen der Wirkstoffe als üblich, vorzugsweise Caprylsäure, eingesetzt werden (0.8 - 1.0 Gew.%, bezogen auf das Blößengewicht), sodass negative Veränderungen der Substrateigenschaften (z. B. Geruch) nicht ausgeschlossen werden können.

Nachteilig an diesen Wirkstoffen ist auch, dass die notwendige, erhöhte Wirkstoffdosierung bei gleichzeitig geringer Wasserverträglichkeit / Wasserlöslichkeit, bei den vorwiegend wässrigen Herstellungsprozessen zu Inhomogenitäten in den zu schützenden Substraten führt. Im Übrigen ist die bevorzugte Caprylsäure mit einem Schmelzpunkt von 16°C, aber auch die höheren Homologen der Carbonsäurederivate mit zum Teil deutlich höheren Schmelzpunkten - sowie die zugehörigen Salze -, als flüssige Substanzen häufig nicht verfügbar. Erstarrung bei entsprechender Abkühlung auf oder unter Raumtemperatur führt zum zwanghaften Darreichen von nicht bevorzugten Feststoffen, zum Teil pastös, und damit technisch nahezu ungeeignet in den üblichen Herstellungsprozessen.

Aufgabe der vorliegenden Erfindung war es daher, stabile Wirkstoffpräparationen zu finden, die einerseits die verarbeitungstechnischen Vorteile flüssiger Formulierungen und gleichzeitig hohe Wirkstoffkonzentrationen bei gleicher oder gar erhöhter Stabilität aufweisen, sowie toxikologisch, ökologisch und aus Sicht des Verbraucherschutzes ein Optimum der aktuellen technischen Möglichkeiten darstellen - z. B. durch niedrige Dosierung der erfindungsgemäßen Darreichungen.

Überraschend wurde nun gefunden, dass man die Aufgabe unter Anwendung bestimmter Wirkstoffpräparationen lösen kann.

Die Erfindung betrifft daher Wirkstoffpräparationen, enthaltend wenigstens 85 Gew.%, bevorzugt wenigstens 92 Gew.%, besonders bevorzugt wenigstens 94 Gew.%, ganz besonders bevorzugt wenigstens 98 Gew.% einer Zusammensetzung bestehend aus jeweils bezogen auf die Zusammensetzung
a) 20 - 79 Gew.-%, bevorzugt 30 - 50 Gew.-% wenigstens einer C₈-C₁₈-Carbonsäure oder deren Derivate, bevorzugt Caprylsäure,
b) 20 - 75 Gew.-%, bevorzugt 30 - 60 Gew.-% eines einzigen phenolischen Wirkstoffes,
c) 1 - 20 Gew.-%, bevorzugt 2 - 17 Gew.-% weiterer Fungizidwirkstoffe,
d) 0 - < 2 Gew.% eines einzigen von Komponente b) unterschiedlichen phenolischen Wirkstoffes.

In einer bevorzugten Ausführungsform sind die erfindungsgemäßen Wirkstoffpräparationen flüssig. Unter "flüssig" wird im Rahmen dieser Anmeldung vorzugsweise ein Schmelzpunkt oberhalb von 5°C verstanden.

Als Carbonsäuren der Komponente a) kommen insbesondere Carbonsäuren mit Alkylresten der Kettenlängen C₈-C₁₈ in Frage, die gesättigt oder einfach oder mehrfach ungesättigt, verzweigt oder an der Alkylkette substituiert sind. Als Derivate kommen insbesondere deren Metallsalze in Frage.

Vorzugsweise geeignet sind dabei Carbonsäuren mit Alkylresten der Kettenlängen C₈-C₁₂, insbesondere solche mit C₈.

Die Alkylreste können zweckmäßig mit Hydroxylgruppen, Sulfat-, Sulfit-, Nitrat-, Nitrit, Aminen oder aromatisch an der Alkylkette einfach oder mehrfach substituiert sein. Bevorzugt sind sie aber unsubstituiert. Vorzugsweise sind die Metallsalze Alkali-, Erdalkali- und/oder Übergangsmetallsalze.

Als weitere Derivate sind vorteilhaft Ester oder Amide, wie Glycerolmonocaprat, Glycerolmonolaurat oder Undecylensaeureamid.

Besonders bevorzugte Carbonsäuren oder deren Derivate der Komponente a) sind Caprylsäure, Pelargonsäure, Undecensäure, Methyl-9-heptadecensäure, cis-9-Heptadecensäure, 3-(R)-Hydroxydecensäure, 3-Hydroxy-5-cis-decensäure, 3-(R)-Hydroxydodecensäure, 3-(R)-Hydroxytetradecensäure, Glycerolmonocaprate, Glycerolmonolaurate, Ricinolsaeure oder Kombinationen dieser Stoffe.

Besonders bevorzugt als Komponente a) ist die Caprylsäure.

Hinsichtlich der Komponente b) enthalten die erfindungsgemäßen Wirkstoffpräparationen einen einzigen phenolischen Wirkstoff, ausgewählt aus der Gruppe 4-Chlor-3-methylphenol (CMK), 3,5-Dimethyl-4-chlorphenol (PCMX), 2-Hydroxybiphenyl (ortho-Phenylphenol, OPP), 4-tert.-Pentylphenol (PTAP), Thymol, p-Thymol, i-Thymol (Carvacrol), Chlorthymol, 2-Benzylphenol, 4-Benzylphenol und 2-Benzyl-4-chlorphenol (Chlorophen).

Bei der Mitverwendung von weiteren von a) und b) verschiedenen Fungiziden der Komponente c) kommen vorzugsweise die nachfolgend genannten in Frage.

Als solche kommen beispielsweise aus der Klasse der heterocyclischen N,S-Verbindungen wie 2-Mercaptobenzothiazol, 2-Thiocyanatomethylthiobenzothiazol (TCMTB), Oktyl-Isothiazolinon (OIT) und Thiabendazol (TBZ); aus der Klasse der Carbamate Iod-Propinylbutylcarbamat (IPBC); aus der Klasse der Azole die Triazol-Derivate, Azaconazol, Hexaconazol, Cyproconazol, Propiconazol, Tebuconazol sowie Imazalil und Climbazol als Imidazol-Verbindungen in Frage. Aus der Klasse der Verbindungen mit aktivierten Halogenatomen kommt Di-Iodomethyl-p-toluylsulphon (DIMTS) in Betracht.

Besonders bevorzugt als Komponente c) sind die Fungizide Oktyl-Isothiazolinon (OIT), 2-Thiocyanatomethylthiobenzothiazol (TCMTB), Thiabendazol (TBZ), Iod-Propinylbutylcarbamat (IPBC), Tebuconazol, Climbazol und/ oder Di-Iodo-methyl-p-toluylsulphon.

Als bevorzugte Kombinationen der Komponente b) und c) sind folgende Wirkstoffkombinationen zu nennen:
OPP / OIT
   OPP / TCMTB
   OPP / TBZ
   OPP / IPBC
   OPP / Tebuconazol
   OPP / Climbazol
   OPP / Di-Iodomethyl-p-toluylsulphon
CMK / OIT
   CMK / TCMTB
   CMK / TBZ
   CMK / IPBC
   CMK / Tebuconazol
   CMK / Climbazole
   CMK / Di-Iodomethyl-p-toluylsulphon (DIMTS)
Chlorophen / OIT
   Chlorophen / TCMTB
   Chlorophen / TBZ
   Chlorophen / IPBC
   Chlorophen / Tebuconazol
   Chlorophen / Climbazol
   Chlorophen / Di-Iodomethyl-p-toluylsulphon (DIMTS)
p-Thymol / OIT
   p-Thymol / TCMTB
   p-Thymol / TBZ
   p-Thymol / IPBC
   p-Thymol / Tebuconazol
   p-Thymol / Climbazol
   p-Thymol / Di-Iodomethyl-p-toluylsulphon (DIMTS)
oder auch
OPP / OIT/ IPBC
   OPP / OIT/ TCMTB
   OPP / OIT/ TBZ
   OPP / TBZ / Climbazol
   OPP / OIT / Climbazol
   OPP / IPBC / DIMTS
OPP / Tebuconazol / IPBC
CMK / OIT/ IPBC
   CMK / OIT / TCMTB
   CMK / OIT/ TBZ
   CMK / TBZ / Climbazol
   CMK / OIT / Climbazol
   CMK / Tebuconazol / IPBC
Chlorophen / OIT / IPBC
   Chlorophen / OIT / TCMTB
   Chlorophen / OIT / TBZ
   Chlorophen / TBZ / Climbazol
   Chlorophen / OIT / Climbazol
   Chlorophen / Tebuconazol / IPBC

Diese Kombinationen sind insbesondere in Kombination mit Caprylsäure der Komponente a) bevorzugt.

Des Weiteren können die Zusammensetzungen weniger als 2 Gew.% eines einzigen von Komponente b) verschiedenen phenolischen Wirkstoffes, Komponente d), enthalten. Komponente d) ist ausgewählt aus der Gruppe 4-Chlor-3-methylphenol (CMK), 3,5-Dimethyl-4-chlorphenol (PCMX), 2-Hydroxybiphenyl (OPP), 4-tert.-Pentylphenol (PTAP), Thymol, p-Thymol, i-Thymol (Carvacrol), Chlorthymol, 2-Benzylphenol, 4-Benzylphenol und 2-Benzyl-4-chlorphenol (Chlorophen), wobei Komponente b) und Komponente d) verschieden sind.

In einer bevorzugten Ausführungsform der Wirkstoffpräparationen werden Zusammensetzungen eingesetzt, bestehend aus einem einzigen phenolischen Wirkstoff aus der Gruppe OPP, CMK, Chlorophen, und p-Thymol sowie wenigstens einem nicht-phenolischen Wirkstoff aus der Gruppe OIT, TCMTB, TBZ, IPBC, Tebuconazol, Climbazol und DIMTS, sowie Caprylsäure.

Besonders bevorzugt sind Zusammensetzungen bestehend aus OPP oder CMK oder Chlorophen sowie wenigstens ein nicht-phenolischer Wirkstoff aus der Gruppe OIT, TCMTB und IPBC, sowie Caprylsäure.

Die erfindungsgemäßen Wirkstoffpräparationen liegen bevorzugt als flüssige, stabile und pumpfähige Präparationen, insbesondere oberhalb von +5 °C vor. Schmelzpunkt erniedrigend kann hierbei die Beimengung von niedermolekuleren Alkoholen oder glykolischen Lösungsmitteln wirken. In einer bevorzugten Ausführungsform enthalten erfindungsgemäße Wirkstoffpräparationen 1 - 10 Gew.-%, bevorzugt 2 - 8 Gew.% eines Lösungsmittels, bevorzugt eines niedermolekularen Alkoholes, besonders bevorzugt Ethanol oder 2-Propanol, oder eines glykolischen Lösungsmittels, besonders bevorzugt 1,2-Propandiol, Ethylenglykol oder Butylenglykol, oder Mischungen davon.

Der Wassergehalt der erfindungsgemäßen Präparationen beträgt vorzugsweise weniger als 1 Gew.-%, insbesondere weniger als 0,5 Gew.-%.

Besonders bevorzugt sind die erfindungsgemäßen Wirkstoffpräparationen, die wenigstens 85 Gew.%, bevorzugt wenigstens 92 Gew.%, besonders bevorzugt wenigstens 94 Gew.%, ganz besonders bevorzugt wenigstens 98 Gew.% der Komponenten a), b) und c) ohne Komponente d) enthalten.

Die Erfindung betrifft weiterhin ein Verfahren zur Herstellung der erfindungsgemäßen Wirkstoffpräparation, dadurch gekennzeichnet, dass man die Komponenten a), b), c) und gegebenenfalls d), vorzugsweise unter Zugabe eines Lösungsmittels, mischt.

Bevorzugt ist ein Verfahren zur Herstellung von Wirkstoffpräparationen, dadurch gekennzeichnet, dass man
i) die Komponente a) mit der in einem Lösungsmittel gelösten Komponente c) mischt, bevorzugt unter Erhitzen auf 35 - 40 °C, und im Anschluss die phenolische Komponente b), und gegebenenfalls die phenolische Komponente d), zufügt, oder
ii) die in einem Lösungsmittel gelöste Komponente a) vorlegt, bevorzugt unter Erhitzen auf 35 - 40 °C, und im Anschluss Komponente b) und c), und gegebenenfalls Komponente d), zufügt, oder
iii) die Komponente a) vorlegt, bevorzugt unter Erhitzen auf 40 - 45°C, die Komponente b), und gegebenenfalls die Komponente d) zufügt, und im Anschluss die Komponente c) hinzufügt.

Die Erfindung betrifft weiterhin die Verwendung der erfindungsgemäßen Wirkstoffpräparation zur Konservierung von collagenfaserhaltigen Substraten, insbesondere Leder und tierischen Häuten.

Die Erfindung betrifft weiterhin ein Verfahren zum Schützen von collagenfaserhaltigen Substraten, insbesondere tierischen Häuten und Leder vor mikrobiellem Befall, indem man die Häute oder das Leder mit der erfindungsgemäßen Wirkstoffpräparation behandelt.

Das Verfahren ist vorzugsweise dadurch gekennzeichnet, dass man die erfindungsgemäßen Wirkstoffpräparationen als solche verwendet beispielsweise ohne mit Wasser zu verdünnen. Hierbei penetrieren die phenolische Wirkstoffkomponente sowie die Carbonsäure (Caprylsäure) in das zu schützende Substrat und lagern sich am Collagen an (Collagen-Affinität). Der/die Reaktivwirkstoff(e) sind ihrerseits vorwiegend auf der Substratoberfläche und in den oberflächennahen Schichten zu finden.

Die Prüfung der Einzelwirkstoffe und der erfindungsgemäßen Präparation erfolgt im Praxisbezogenen Agar-Diffusionstest (ASTM 4576-08 - Standard Test Method for Mould Growth Resistance) gegen übliche Leder-relevante Prüforganismen.

Dabei wurde gefunden, dass die Einzelwirkstoffe, welche für die erfindungsgemäßen Mischungen Verwendung finden, erhebliche Lücken (Wirkungsschwächen) in ihrer fungiziden Wirkung aufweisen. So zeigte sich, dass die phenolischen Komponenten, wie OPP, CMK, Chlorophen, oder die Thymol-Derivate bei einer üblichen Dosierung von 0,2 Gew.-% (2000 ppm) eine Schwäche gegen Hormoconis resinae und auch gegen Trichoderma viride besitzen. Weiterhin wurde gefunden, dass Dosierungen von 0,2 Gew.-% IPBC bzw. 0,5 Gew.% Caprylsäure unwirksam gegen Leder-relevante Deuteromyceten (Schimmelpilze) sind.

Überraschend wurde dagegen gefunden, dass die erfindungsgemäßen Wirkstoffpräparationen besonders effektiv gegen lederzerstörende Schimmelpilz-Arten, wie z. B. Aspergillus-, Cladosporium-, Penicillium-, Trichoderma-Arten, aber auch gegen Aureobasidium sp., Coniophora sp., Fusarium sp., Paecilomyces sp., Rhizopus sp, Sclerophoma sp., Stachybotrys sp. und Trichophyton sp. sind und sich damit deutlich von der Wirkung der reinen Caprylsäure abgrenzen.

Durch die erfindungsgemäßen Wirkstoffpräparationen kann die Dosierungshöhe der reinen Caprylsäure auf ein Zehntel und weniger ihrer bisher notwendigen Menge reduziert werden.

Bei der Einzelprüfung von Caprylsäure benötigte man 0,80 - 1,00 Gew.-% (entspr. 8000 - 10.000 ppm) zur ausreichenden fungiziden Ausrüstung der feuchten Chromleder. Bei Anwendung der erfindungsgemäßen Präparationen war bereits bei Dosierung von 0,10 - 0,15 Gew.-% eine deutliche bis ausreichende Wirkung erkennbar. Somit ergibt sich eine Reduktion der Caprylsäure auf vorzugsweise 300 - 750 ppm im feuchten Chromleder.

Als Leder werden auch feuchte Chrom-Leder (wet blue) und feuchte chrom-freie Leder (wet white) verstanden. Unter tierischen Häuten werden Rohhäute - unbehandelt, direkt nach der Schlachtung - von Rindern, Schweinen, Schafen, Ziegen, Kamelen, Geflügel, wie Strauße aber auch Echsen, wie Schlange oder Krokodil verstanden.

Die erfindungsgemäßen Wirkstoffpräparationen können bei der Leder-Herstellung wahlweise direkt vor Beginn der Gerbung der tierischen Häute (Blößen), während oder nach der Gerbstoffzugabe (Chromgerbstoff, Chrom-freier, organischer Gerbstoff wie Glutaraldehyd, synthetische Gerbstoffe (Syntane) oder Vegetabilgerbstoffe) mit 0,10 - 0,30 Gew.-%, bevorzugt 0,12 - 0,15 Gew.-%, berechnet auf Blößengewicht, ins saure Prozesswasser (Gerbflotte) bei einem pH-Wert des wässrigen Mediums von 2 bis 4,5, insbesondere von 2,5 bis 3,0 zugegeben werden.

Ebenfalls besteht die Möglichkeit kurz nach der Zugabe des Abstumpfmittels (Basifizierung zur Einstellung des End-pH-Wertes) die erfindungsgemäßen Wirkstoffpräparationen in bereits genannter Menge zu dosieren. Da die beschriebenen Wirkstoffpräparationen ölige Mischungen, mit geringer Wasserlöslichkeit darstellen, werden sie vorzugsweise unverdünnt (pur) dem Prozess zugeführt. Die Wirkstoffaufnahme aus der wässrigen Prozessflotte in und auf die Leder erfolgt durch die Wirkstoffaffmitäten zur Collagenfaser der tierischen Haut.

Weiterhin besteht die Möglichkeit einer Sprühapplikation der erfindungsgemäßen Wirkstoffpräparationen direkt nach dem Ende des Gerbprozesses - nach dem Abwelken - bzw. nach dem Falzen und Stapeln des fertigen, feuchten Zwischenproduktes. Dazu werden die Leder in feinster Form mit einer alkoholischen / glykolischen Verdünnung, aus 20 - 50% Lösemittel und 50 - 80% der erfindungsgemäßen Wirkstoffpräparationen, benetzt.

Es besteht auch die Möglichkeit mit den erfindungsgemäßen Präparationen Leder und Felle zum Schluss der wässrigen Herstellung - in der sogenannten Fettung - zu konservieren. Aufgrund ihrer öligen Erscheinung können die erfindungsgemäßen Mischungen in die ebenfalls öligen oder pastösen Fettungsmittel homogen eingetragen werden, vorzugsweise unter Rühren. Das dann konzentriert fungizid ausgerüstete Fett bzw. Öl wird entsprechend der Verfahrensweise / Leder-Herstellung dem finalen Prozessschritt zugefügt.

Die erfindungsgemäßen Präparationen sind lagerstabil und pumpfähig.

Trotz eines mehr als doppelt so hohen Wirkstoffgehaltes, weisen die erfindungsgemäßen Präparationen keine Nachteile gegenüber bekannten Präparationen auf, welche wenigstens 50 - 70 Gew.-% Lösemittel und/oder Formulierhilfsmittel, wie z. B. Emulgatoren enthalten.

Auch die Wirksamkeit der handelsüblichen Lösemittel-basierten Präparationen konnte erreicht werden.

Die Erfindung betrifft weiterhin ein Verfahren zum Schützen von collagenfaserhaltigen Substraten, insbesondere tierischen Häuten und Leder vor mikrobiellem Befall, dadurch gekennzeichnet, dass man die Häute oder das Leder mit einer erfindungsgemäßen Wirkstoffpräparation nach Anspruch 1 behandelt.

Die Erfindung betrifft weiterhin collagenfaserhaltige Substrate, konserviert mit wenigstens einer erfindungsgemäßen Wirkstoffpräparation.

### Beispiele:

Die Angaben von Teilen in den Beispielen entsprechen Gewichtsteilen.

### Beispiel 1

Zur Herstellung einer erfindungsgemäßen Präparation werden 40 Teile Caprylsäure vorgelegt und 14 Teile einer OIT-Lösung (45 Gew.-% OIT in 1,2- Propandiol) hinzugefügt. In diese Mischung werden unter Rühren, bei gelindem temperieren, 46 Teile festes, kristallines OPP gegeben (Temperatur der Mischung ca. 35 - 40°C) und gelöst.

### Beispiel 2

Es werden 30 Teile Caprylsäure sowie 10 Teile einer OIT-Lösung (45 Gew.-% OIT in 1,2-Propandiol) mit 60 Teilen festem, kristallinem CMK unter Rühren und bei geringer Temperatur (max. 40°C) gelöst.

### Beispiel 3

40 Teile Caprylsäure und 2 Teile 1,2-Propandiol werden auf ca. 35°C erwärmt. Dazu werden 50 Teile OPP sowie 8 Teile Tebuconazol unter Rühren zugegeben. Nach Abkühlen auf Raumtemperatur erhält man eine flüssige, klare, leicht gelbliche, erfindungsgemäße Präparation.

### Beispiel 4

40 Teile Caprylsäure werden vorgelegt und gelinde auf ca. 40 - 45°C erwärmt. Hinzu kommen 50 Teile kristallines OPP und werden darin gelöst. Es muss weiterhin leicht erwärmt werden, weil die Lösung endotherm reagiert und sich sonst der Vorgang erheblich verzögern würde. In die nun erhaltene Mischung werden zunächst 5 Teile IPBC sowie 5 Teile Tebuconazol unter weiterem Rühren - bei Temperatur von ca. 40°C - zugegeben. Nach Abkühlen auf Raumtemperatur erhält man eine flüssige, klare, leicht gelbliche, erfindungsgemäße Präparation.

Die Mischungen der nachfolgenden Tabelle wurden analog den Beispielen 1 - 4 erhalten.

| | | | | | |
|---|---|---|---|---|---|
| 5. | 50,00 Gew. | Teile Chlorophen | 6. | 40,00 Gew. | Teile CMK |
| | 4,50 Gew. | Teile OIT | | 17,00 Gew. | Teile TBZ |
| | 40,00 Gew. | Teile Caprylsäure | | 35,00 Gew. | Teile Caprylsäure |
| | 5,50 Gew. | Teile 1,2-Propandiol | | 8,00 Gew. | Teile 1,2- Propandiol |
| 7. | 35,00 Gew. | Teile p-Thymol | 8. | 35,00 Gew. | Teile OPP |
| | 6,75 Gew. | Teile OIT | | 10,00 Gew. | Teile IPBC |
| | 50,00 Gew. | Teile Caprylsäure | | 5,00 Gew. | Teile DIMTS |
| | 8,25 Gew. | Teile 1,2-Propandiol | | 45,00 Gew. | Teile Caprylsäure |
| | | | | 5,00 Gew. | Teile 1,2-Propandiol |

Sämtliche Präparationen sind lagerstabil bis mind. +5°C, wobei der Erstarrungspunkt durch Zugabe von weiterem Glykol noch erheblich erniedrigt werden kann.

### Anwendungsbeispiel 1

Die Gerbung mittels eines Chromgerbstoffes erfolgte wie folgt:
Nach üblichem Äscherverfahren, Entkälkung, Beize und Zugabe von Pickelsäuren (diese zur Änderung des pH-Wertes von alkalisch nach sauer, pH 8 → pH 2) werden die Chromgerbstoffe hinzugegeben. Nach erfolgter Zugabe des Konservierungsmittels - hier die erfindungsgemäße Präparation - wird in der sog. Basifizierung der End-pH-Wert von ca. 4 eingestellt.

Als Konservierungsmittel wird die in Beispiel 1 beschriebene Wirkstoffpräparation mit 0,15 Gew.-%, (entspricht 690 ppm OPP, 95 ppm OIT, 600 ppm Caprylsäure und 115 ppm 1,2 Propandiol) berechnet auf Hautgewicht, dem Leder-Herstellungsprozess zugesetzt. Dies erfolgte Prozess-bedingt ca. 15 - 30 Minuten nach der Zugabe des Chromgerbstoffes in die saure Prozessflotte (pH-Wert 2,5 bis 3,0).

Die fungizide Wirkung der so erhaltenen feuchten Chrom-Leder (Wet blue), konserviert durch die erfindungsgemäßen Präparationen, wurden gemäß der Prüfmethode ASTM 4576-08 - "Standard Test Method for Mould Growth Resistance" (Praxis-bezogener Agar-Diffusionstest) gegen übliche Leder-relevante Prüforganismen untersucht. Hierbei wurde die wesentlich verbesserte Wirksamkeit der flüssigen Präparationen gegenüber der der Einzelwirkstoffe gezeigt.

Zum Nachweis der fungiziden Wirkung der erfindungsgemäßen Präparationen wurden zusätzlich die minimalen Hemmkonzentrationen (MHK-Werte) auf Malz-Extrakt-Agar (MEA-Medium, Merck 5398) gegen Leder-relevante Deuteromyceten (Schimmelpilze) bestimmt.

Dazu wurde die Mischungen konzentrationsabhängig - 20 / 50 / 100 / 200 / 500 / 1000 mg/L - auf das, mit den Prüfschimmeln kontaminierte Agar-Medium gegeben. Die Werte der minimal wirksamen Konzentrationen für Beispiel 1 sind der nachstehenden Tabelle zu entnehmen:

| Minimale Hemmkonzentrationen in mg/L | | | |
|---|---|---|---|
| Prüfschimmel | Mischung nach Beispiel 1 in [mg / L) vs. Caprylsäure | Prüfschimmel | Mischung nach Beispiel 1 in [mg / L) vs. Caprylsäure |
| Aspergillus flavus | 75 / 100 vs. >1000 | Paecilomyces variotii | 20 / 5 vs. > 1000 |
| Aspergillus niger | 75 / 50 vs. >1000 | Penicillium chrysogenum | 20 / 10 vs. >1000 |
| Aspergillus repens | 50 / 75 vs. >1000 | Penicillium citrinum | 20 / 50 vs. >1000 |
| Aureobasidium pullulans | 20 / 20 vs. >1000 | Penicilllium funicolosum | 10 / 20 vs. >1000 |
| Cladosporium herbarum | >20 / 50 vs. >1000 | Penicillium glaucum | <20 / 50 vs. >1000 |
| Hormoconis resinae | >20 / 50 vs. >1000 | Trichoderma harzianum | 50 / 75 vs. >1000 |
| | | Trichoderma viride | 75/ 100 vs. >1000 |

Vergleichbar gute Werte werden auch unter Verwendung der Wirkstoffpräparation gemäß den Beispielen 2 - 8 erhalten.

## Patentansprüche

1. Wirkstoffpräparationen, enthaltend wenigstens 85 Gew.%, bevorzugt wenigstens 92 Gew.%, besonders bevorzugt wenigstens 94 Gew.%, ganz besonders bevorzugt wenigstens 98 Gew.% einer Zusammensetzung bestehend aus jeweils bezogen auf die Zusammensetzung
a) 20 - 79 Gew.-%, bevorzugt 30 - 50 Gew.-% wenigstens einer C₈-C₁₈-Carbonsäure oder deren Derivate, bevorzugt Caprylsäure,
b) 20 - 75 Gew.-%, bevorzugt 30 - 60 Gew.-% eines einzigen phenolischen Wirkstoffes,
c) 1 - 20 Gew.-%, bevorzugt 2 - 17 Gew.-% weiterer Fungizidwirkstoffe,
d) 0 - < 2 Gew.% eines einzigen von Komponente b) unterschiedlichen phenolischen Wirkstoffes.

2. Wirkstoffpräparationen gemäß Anspruch1, **dadurch gekennzeichnet, dass** sie flüssig sind.

3. Wirkstoffpräparationen gemäß einem der Ansprüche 1 oder 2, **dadurch gekennzeichnet, dass** die Carbonsäure der Komponente a) Caprylsäure ist.

4. Wirkstoffpräparationen gemäß einem der Ansprüche 1, 2 oder 3, **dadurch gekennzeichnet, dass** Komponente b) ausgewählt ist aus der Gruppe 4-Chlor-3-methylphenol (CMK), 3,5-Dimethyl-4-chlorphenol (PCMX), 2-Hydroxybiphenyl (OPP), 4-tert.-Pentylphenol (PTAP), Thymol, p-Thymol, i-Thymol (Carvacrol), Chlorthymol, 2-Benzylphenol, 4-Benzylphenol und 2-Benzyl-4-chlorphenol (Chlorophen).

5. Wirkstoffpräparationen gemäß einem der Ansprüche 1, 2, 3 oder 4, **dadurch gekennzeichnet, dass** Komponente c) wenigstens Oktyl-Isothiazolinon (OIT), 2-Thiocyanatomethylthiobenzothiazol (TCMTB), Thiabendazol (TBZ), Iod-Propinylbutylcarbamat (IPBC), Di-Iodomethyl-p-toluyl-sulphon (DIMTS), Azaconazol, Hexaconazol, Cyproconazol, Propiconazol, Tebuconazol, Imazalil und/ oder Climbazol ist.

6. Wirkstoffpräparationen gemäß einem der Ansprüche 1, 2, 3, 4 oder 5, **dadurch gekennzeichnet, dass** Komponente d) ausgewählt ist aus der Gruppe 4-Chlor-3-methylphenol (CMK), 3,5-Dimethyl-4-chlorphenol (PCMX), 2-Hydroxybiphenyl (OPP), 4-tert.-Pentylphenol (PTAP), Thymol, p-Thymol, i-Thymol (Carvacrol), Chlorthymol, 2-Benzylphenol, 4-Benzylphenol und 2-Benzyl-4-chlorphenol (Chlorophen).

7. Wirkstoffpräparationen gemäß einem der Ansprüche 1, 2, 3, 4, 5 oder 6, **dadurch gekennzeichnet, dass** sie jeweils 1 bis 10 Gew.%, bevorzugt 2 bis 8 Gew.% eines Lösungsmittels, bevorzugt eines niedermolekularen Alkohols oder glykolischen Lösungsmittels, oder Mischungen davon, enthalten.

8. Verfahren zur Herstellung von Wirkstoffpräparationen gemäß einem der Ansprüche 1, 2, 3, 4, 5, 6 oder 7, **dadurch gekennzeichnet, dass** man die Komponenten a), b), c) und gegebenenfalls d), vorzugsweise unter Zugabe eines Lösungsmittels, mischt.

9. Verfahren zur Herstellung von Wirkstoffpräparationen gemäß Anspruch 8, **dadurch gekennzeichnet, dass** man
i) die Komponente a) mit der in einem Lösungsmittel gelösten Komponente c) mischt, bevorzugt unter Erhitzen auf 35 - 40 °C, und im Anschluss die phenolische Komponente b), und gegebenenfalls die phenolische Komponente d), zufügt, oder
ii) die in einem Lösungsmittel gelöste Komponente a) vorlegt, bevorzugt unter Erhitzen auf 35 - 40 °C, und im Anschluss Komponente b) und c), und gegebenenfalls Komponente d), zufügt, oder
iii) die Komponente a) vorlegt, bevorzugt unter Erhitzen auf 40 - 45°C, die Komponente b), und gegebenenfalls die Komponente d) zufügt, und im Anschluss die Komponente c) hinzufügt.

10. Verwendung von Wirkstoffpräparationen gemäß einem der Ansprüche 1, 2, 3, 4, 5, 6 oder 7 zur Konservierung von collagenfaserhaltigen Substraten, insbesondere Ledern und tierischen Häuten.

11. Verfahren zum Schützen von collagenfaserhaltigen Substraten, insbesondere tierischen Häuten und Leder vor mikrobiellem Befall, **dadurch gekennzeichnet, dass** man die Häute oder das Leder mit einer Wirkstoffpräparation nach einem der Ansprüche 1, 2, 3, 4, 5, 6 oder 7 behandelt.

12. Collagenfaserhaltige Substrate, konserviert mit wenigstens einer Wirkstoffpräparation gemäß einem der Ansprüche 1, 2, 3, 4, 5, 6 oder 7.
